# EUROPEAN PATENT SPECIFICATION

(11) **EP 1 684 547 B1**
(45) Date of publication and mention of the grant of the patent: **12.03.2008**
(21) Application number: 05100302.8
(22) Date of filing: 19.01.2005
(51) Int. Cl.: H05B 6/68

(54) **Method of operating microwave oven and determining the cooking time**
Verfahren zur Steuerung eines Mikrowellenofens und Feststellung der Kochzeit
Procédé pour faire fonctionner un four à microondes et pour déterminer le temps de cuisson

(43) Date of publication of application: 26.07.2006
(73) Proprietor: WHIRLPOOL CORPORATION, Benton Harbor Michigan 49022 (US)
(72) Inventor: Isaksson, Andreas c/o Whirlpool Europe s.r.l, 21025 Comerio (IT); Wahlander, David c/o Whirlpool Europe s.r.l, 21025 Comerio (IT); Hallgren, Fredrik c/o Whirlpool Europe s.r.l, 21025, Comerio (IT); Torngren, Per c/o Whirlpool Europe s.r.l, 21025 Comerio (IT)
(74) Representative: Guerci, Alessandro

(56) References cited:
- EP-A- 0 272 089
- WO-A-20/05004543

## Description

The present invention relates to a system for controlling the operation of a microwave oven and determining the cooking time for a food item, and more particularly to a system for monitoring the change in color of a thermochromic element associated with a microwave food package.

### Background of the Invention

Owners of microwave ovens often find it difficult to assess whether food is properly cooked. It is hard to know whether the inside of food is hot enough - or overcooked - even when correctly using guidelines on timing. Because the air inside a microwave oven does not heat up significantly compared to the food or packaging being heated, it is difficult to measure temperature of food within a microwave oven. Moreover, the appearance of the food alone does not help to tell whether the inside of food is cooked or heated adequately because of the penetrative way in which the microwaves cook the food.

Many microwavable foods are purchased and supplied in packaging which can be directly placed inside a microwave and heated. In heating such packaged food items, it is likewise difficult to assess when the food is properly heated. In such a case, direct observation of the food is difficult or impossible to do and it is necessary to rely on guidelines for timing supplied with such food item. However, due to variations in a number factors, such instructions are not always appropriate for proper heating. It is frequently the practice that heating or cooking of such food items is stopped and the oven door is opened so that the temperature of the food item may be tested, for example by stirring or prodding the food item sometimes directly by finger. This is inconvenient and slows the cooking process, and can lead to a deterioration in the taste or texture of heated foods.

Various systems for directly sensing the temperature of food items heated in a microwave have been proposed. Published UK Patent Application GB 2 312 954 discloses a system of monitoring the temperature of a microwave container for heating food where the container is provided with a thermochromic composition which changes colour over a desired temperature range and the colour of the composition is monitored, visually or spectroscopically, during the heating process. In this way, it is possible to detect when the package or container has received sufficient microwave energy.

Swedish Patent SE 0302030 pertains to a device enabling temperature controlled heating of primarily solid food stuff in a microwave oven by means of monitoring the colour changes in a heat sensitive, readable colour (thermochromic) marking provided on a food stuff micro-wavable package. Since the temperature of the surface of the food stuff container during heating is not the same as the actual temperature of the food stuff, the colour marking is located on the surface of a block of a polymer material, which is thermally insulated from the food stuff, and which is arranged to be subject to the same microwave radiation as the food stuff inside the oven, and which, through the choice of suitable dielectric properties, is subject to heating corresponding to that of the food stuff. The colour change may be monitored by a detector.

While the above described prior proposed systems provide a partial solution to the problem of temperature measurement within a microwave oven, they do not address the practical realities of operating within a modern microwave oven. There is a need of a system for monitoring the temperature of a food items being heated on a rotating microwave turn table.

### Summary of the Invention:

According to the invention, a method of operating a microwave oven (10) and determining the correct cooking time for a food item placed within the oven is provided. A food package (28) having a thermochromic element (26) which change colour over a predetermined temperature range is placed in the microwave oven. Microwave energy is supplied into the oven. The food package (28) is rotated within the oven cavity and the colour of the thermochromic element is monitored as it rotates past an opto-electronic device or detector (24) capable of detecting the colour change of the thermochromic element such that a plurality of signal pulses are generated having a value corresponding to the colour of the element. The supply of microwave energy into the oven is terminated when the rate of change between successive pulses decreases to a predetermined value.

### Brief Description Of The Drawings

The present invention will be more apparent from the accompanying drawings, which are provided by way of non-limiting example and in which:
FIG. 1 is a perspective view of a microwave oven embodying the principles of the present invention.
FIG. 2 is a schematic illustration of the control unit and control elements of the present invention.
FIG. 3 is a graph showing the change in pulse signals received by the detector as the food package rotates within the oven.
FIG. 4 is a flow chart illustrating the operation and control of the microwave oven of the present invention.

### Detailed Description Of The Preferred Embodiments

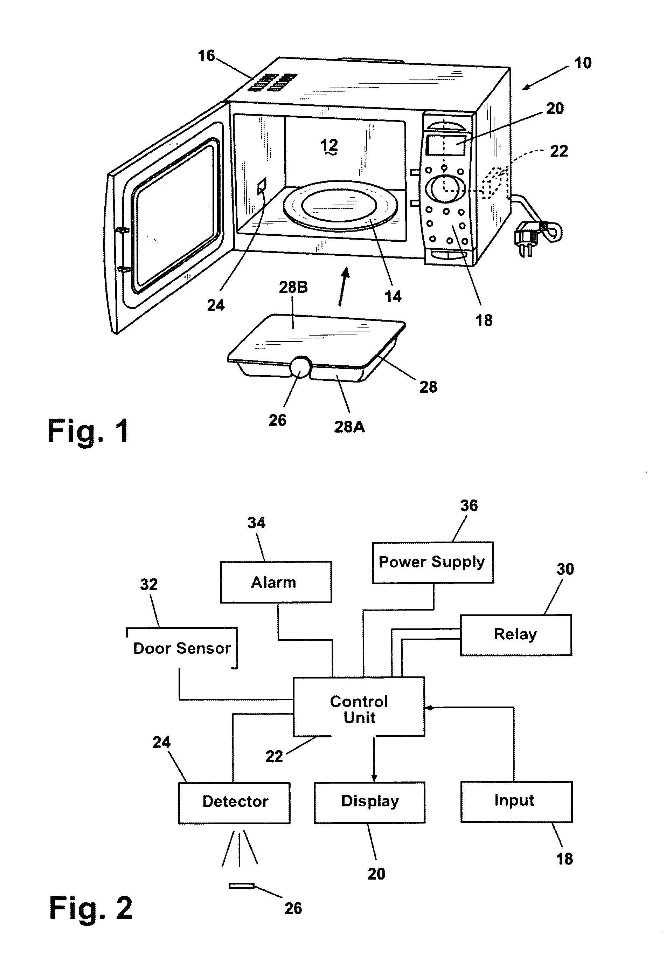

With reference to FIG. 1, a microwave oven 10 of the present invention is shown having a oven cavity 12 with a rotating plate or turntable 14 and an exterior cabinet 16. A user interface 18 and display unit 20 is provided along a front surface and is connected to a control unit 22 of the oven. An optical detector 24 is provided which is able to detect the colour change of a thermochromic element or disc 26 mounted onto a food package 28. The food package 28 may be of any type including the type comprising a tray 28a which may form a plurality of compartments for holding food item and a flexible film or cover 28b for covering the food items.

FIG. 2 illustrates the control system for the present invention. This system comprises the control unit or microprocessor 22 for storing key data inputted from the user interface input device 18 and for controlling the operation of the whole system of the microwave oven. The control unit 22 operates to control relay drive unit 30 for controlling a high voltage transformer (which oscillates a magnetron) and the turntable motor (not shown). A door sense unit 32 is provided for sensing the opening and closing of the door of the microwave oven. The display unit 20 receives signals to display the status and the time, etc, of the microwave oven. An alarm generation unit 34 operate a buzzer or other device (not shown) for alarming the termination of cooking. A power supply unit 36 is provided for supplying the power to each unit of the system. The detector unit 24 senses the presence and colour change of the reflective disc 26 as described further herein.

During use, the food package 28 with the thermochromic disc 26 is placed in the oven cavity 12 for heating. As the disc is heated, due to its thermochromic properties, it will change colour. The dielectric properties of the disc material are tailored to give a specific power dissipation when the disc is subject to microwaves. More particularly, the thermochromic element 26 may be mounted to a small block or plate of a polymeric material which is thermally insulated from the food stuff, and which is arranged to be subject to the same microwave radiation as the food stuff inside the oven, and which, through the choice of suitable dielectric properties, is subject to heating corresponding to that of the food stuff, such as disclosed in Swedish patent SE 0302030. The thermochromic element 26 may be connected or associated with food packaging 28 in many different ways and may be formed as part of a packaging label for the food package 28.

The detector 24 may be of any type but is preferably, an opto-electronic device, capable to detect the colour change of the disc. The detector unit 24 may consists of a high intensity LED and a light detector tuned to the same light wavelength. There may also be a filter in front of the detector tuned to the LED wavelength. The light source and the light detector are preferably mounted together as a unit. The detector 24 may be positioned perpendicular to a radius of the turntable 14 and at a horizontal angle looking towards the centre of the turntable 14. The detector operates a light source (e.g. LED) to emit a beam of light and receive the reflected signal. In order to overcome the problem of interfering light sources, the light source may be pulsed and a synchronous rectifier may be used to discriminate between the measuring signal and interfering light sources.

Upon initiation of heating, the turntable 14 is rotated causing the package 28 and thermochromic disc 26 and food items to rotate as well. This rotation of food items is well know in a microwave oven and provides for even heating of food items. The rotation of the food and the disc 26 is an important aspect of the detection technology. When the disc 26 is not in front of the detector 24, a zero level for the signal can be established. When the thermochromic disc 26 passes the detector, a pulse will be detected. This helps in detecting abnormal conditions, such as missing disc. This condition can then be communicated to the user through the display 20 or audible signal.

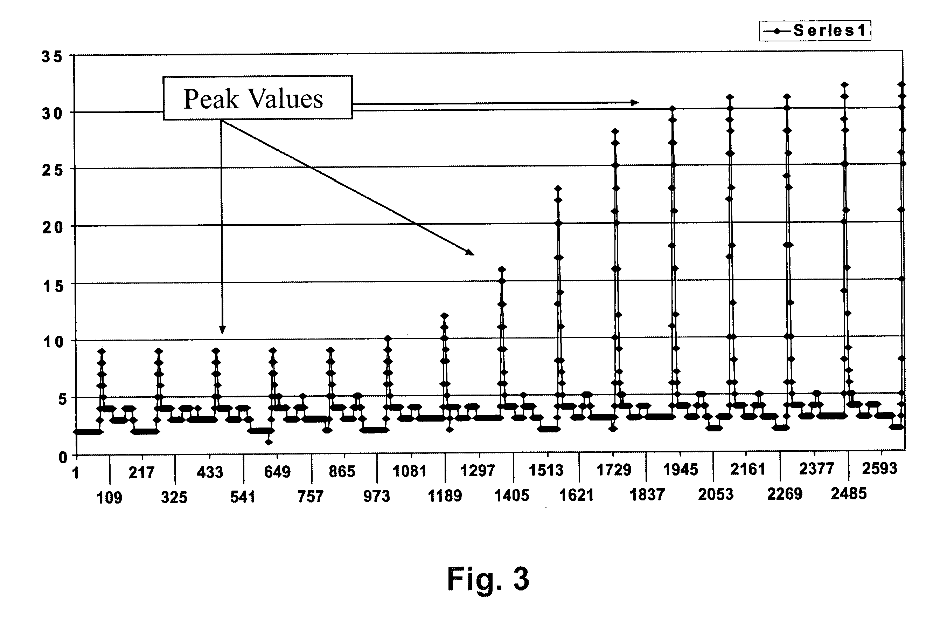

The diagram shown in FIG 3 shows the peak in reflection that is recorded by the detector 24 for each turn as the disc 26 passes. By comparing each peak with the two preceeding peaks, it is possible to determine when the change in colour has taken place. Additionally, the absence of signal peaks can be used to identify a misalignment of the disc 26 or system failure.

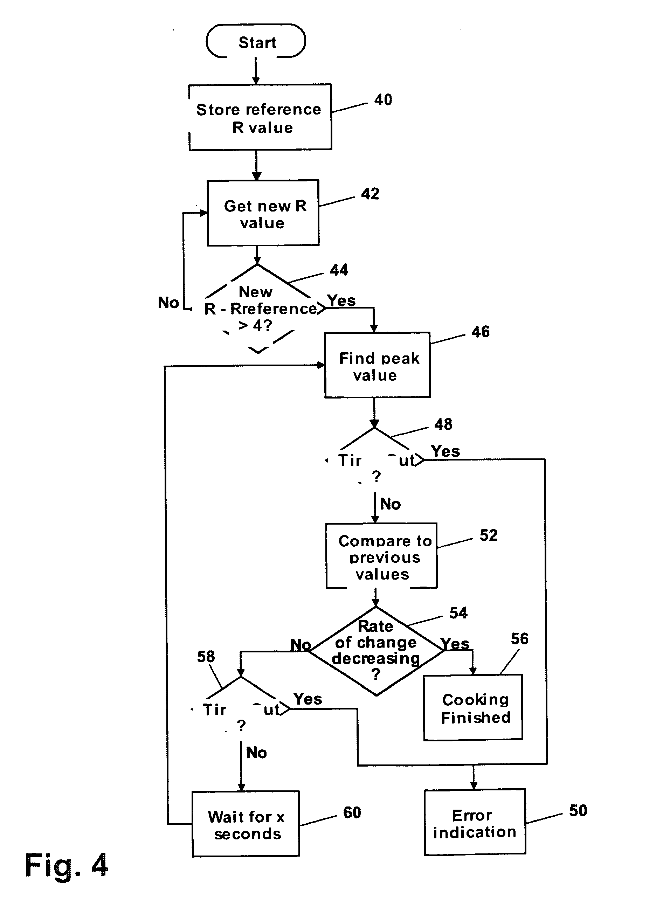

FIG. 4 illustrates the control logic utilized in the present invention. Upon initiation of a heating cycle, the system operates to store a reference reflection R value and sense new reflection R values, steps 40, 42 and 44. After a predetermined period, the system begins to sense for peak values, step 46. If no peak is sensed for a pre-set period of time the current program will terminate and an error indication and/or audible signal will be displayed to the user, steps 48 and 50. During this time, microwaves will be applied to the food load and therefore, in a timeout condition, the food will be exposed to some amount of microwave energy.

Where peak values are successfully measured, these values are compared to previous values and the rate of peak value change is measured, steps 52 and 54. When the rate of change decreases to a predetermined level approaching zero, this indicates that the colour change has been completely accomplished. By correlating this to the proper temperature of the food item, this condition can be used to identify when the food has reached the desired temperature and cooking can be terminated, step 56. In the event peak values do not decrease over a pre-set time, the system indicates to the user and error indication, steps 58 and 50.

The present system provides for a robust method of using the thermochromic disc 26. Varying alignment of the disc 26 with the detector 24 leads to a varying level of reflection. Accordingly, a system seeking an absolute or predetermined reflection value is susceptible to failure due to misalignment. In the present invention, it is variation or rate of change in the reflection signal due to rotation of the turntable that is monitored to determined the proper end cooking period. It can be understood that any colour change can be used.

As is apparent from the foregoing specification, the invention is susceptible of being embodied with various alterations and modifications which may differ particularly from those that have been described in the preceding specification and description. It should be understood that we wish to embody within the scope of the patent warranted hereon all such modifications as reasonably and properly come within the scope of our contribution to the art.

## Claims

1. A method of operating a microwave oven (10) and determining the correct cooking time for a food item placed within the oven, which method comprises the steps of:
placing in the microwave oven a food package (28) having a thermochromic element (26) which changes colour over a predetermined temperature range;
supplying microwave energy into the oven;
rotating the food package within the oven cavity;
monitoring the colour of the thermochromic element as it rotates past a detector (24) for detecting the colour change of the thermochromic element such that a plurality of signal pulses are generated having a value corresponding to the colour of the element;
terminating the supply of microwave energy into the oven when the rate of change between successive pulses decreases to a predetermined value.

2. The method of operating a microwave oven as claimed in claim 1, wherein if no signal pulses are measured within a predetermined time period, the supply of microwave energy into the oven is terminated and an error signal is provided to the user.

3. The method of operating a microwave oven as claimed in claim 2, wherein the error signal is communicated to the user through a display unit (20) and/or audible signal.

4. The method of operating a microwave oven as claimed in claim 1, where the error signal indicates that the food package within the oven must be adjusted for optimal signal measurement.

5. The method of operating a microwave oven as claimed in claim 1, wherein if rate of change between successive signal pulses does not decrease within a predetermined time period, the supply of microwave energy into the oven is terminated and an error signal is provided to the user.

6. The method of operating a microwave oven as claimed in claim 1, wherein the value of the signal pulses increases during the heating of the thermochromic element and wherein the supply of microwave energy into the oven is terminated when the rate of change between successive pulses decreases to a predetermined value.

7. The method of operating a microwave oven as claimed in claim 1, wherein the thermochromic element (26) may be preferably mounted to a small block or plate of a polymeric material which is thermally insulated from the food item and which is subject to heating corresponding to that of the food item located provided within the food package.

8. The method of operating a microwave oven as claimed in claim 1, wherein the thermochromic element is applied and forms part of a food package label.

9. The method of operating a microwave oven as claimed in claim 1, wherein the detector (24) is an opto-electronic device capable of emitting and receiving a light signal.

## Patentansprüche

1. Verfahren zum Betrieb eines Mikrowellenofens und Bestimmen der korrekten Kochzeit für einen im Ofen platzierten Nahrungsmittelartikel, welches Verfahren die Schritte umfasst:
- Platzieren einer Lebensmittelverpackung (28) mit einem thermochromen Element (26), welches die Farbe über einen vorgegebenen Temperaturbereich verändert, in dem Mikrowellenofen;
- Zuführen von Mikrowellen-Energie in den Ofen;
- Drehen der Lebensmittelverpackung innerhalb des Ofenraums;
- Überwachen der Farbe des thermochromen Elementes, während es an einem Detektor 24 vorbei rotiert, um die Farbveränderung des thermochromen Elementes so zu detektieren, dass eine Mehrzahl von Signalimpulsen erzeugt wird, die einen Wert entsprechend der Farbe des Elements aufweisen;
- Beenden der Zufuhr von Mikrowellen-Energie in den Ofen, wenn die Veränderungsrate zwischen aufeinander folgenden Impulsen auf einen vorgegebenen Wert absinkt.

2. Verfahren zum Betrieb eines Mikrowellenofens gemäß Anspruch 1, wobei, falls innerhalb eines vorgegebenen Zeitraums keine Signalimpulse gemessen werden, die Zufuhr von Mikrowellen-Energie in den Ofen beendet wird und dem Anwender ein Fehlersignal bereitgestellt wird.

3. Verfahren zum Betrieb eines Mikrowellenofens gemäß Anspruch 2, wobei das Fehlersignal dem Anwender über eine Anzeigeeinheit (20) und/oder ein hörbares Signal mitgeteilt wird.

4. Verfahren zum Betrieb eines Mikrowellenofens gemäß Anspruch 1, wobei das Fehlersignal anzeigt, das die Lebensmittelverpackung innerhalb des Ofens für eine optimale Signalmessung ausgerichtet werden muss.

5. Verfahren zum Betrieb eines Mikrowellenofens gemäß Anspruch 1, wobei, falls die Veränderungsrate zwischen aufeinanderfolgenden Signalimpulsen nicht innerhalb eines vorgegebenen Zeitraums absinkt, die Zufuhr von Mikrowellen-Energie in den Ofen beendet wird und dem Anwender ein Fehlersignal bereitgestellt wird.

6. Verfahren zum Betrieb eines Mikrowellenofens gemäß Anspruch 1, wobei der Wert der Signalimpulse während der Erhitzung des thermochromen Elementes ansteigt und wobei die Zufuhr von Mikrowellen-Energie in den Ofen beendet wird, wenn die Veränderungsrate zwischen aufeinanderfolgenden Impulsen auf einen vorgegebenen Wert absinkt.

7. Verfahren zum Betrieb eines Mikrowellenofens gemäß Anspruch 1, wobei das thermochrome Element (26) vorzugsweise auf einem kleinen Block oder einer Platte eines Polymermaterials angebracht werden kann, der/die thermisch gegenüber dem Nahrungsmittelgegenstand isoliert ist und der/die einer Erhitzung entsprechend derjenigen des in der Nahrungsmittelverpackung vorgesehenen Nahrungsmittelgegenstands unterworfen wird.

8. Verfahren zum Betrieb eines Mikrowellenofens gemäß Anspruch 1, wobei das thermochrome Element auf einem Lebensmittelverpackungs-Etikett aufgebracht und Teil von ihm ist.

9. Verfahren zum Betrieb eines Mikrowellenofens gemäß Anspruch 1, wobei der Detektor (24) eine optoelektronische Vorrichtung ist, die zum Ausstrahlen und Empfangen eines Lichtsignals fähig ist.

## Revendications

1. Procédé pour faire fonctionner un four à micro-ondes (10) et pour déterminer le temps de cuisson correct pour un produit alimentaire placé dans le four, lequel procédé comprend les étapes consistant à :
placer dans un four à micro-ondes un emballage alimentaire (28) ayant un élément thermochromique (26) qui change de couleur sur une plage de températures prédéterminée ;
alimenter d'énergie micro-onde dans le four ;
faire tourner l'emballage alimentaire dans la cavité du four ;
surveiller la couleur de l'élément thermochromique lorsqu'il tourne au-delà d'un détecteur (24) pour détecter le changement de couleur de l'élément thermochromique de sorte que l'on génère une pluralité d'impulsions de signaux ayant une valeur correspondant à la couleur de l'élément ;
arrêter l'alimentation de l'énergie micro-onde dans le four lorsque la vitesse de changement entre les impulsions successives diminue jusqu'à une valeur prédéterminée.

2. Procédé pour faire fonctionner un four à micro-ondes selon la revendication 1, dans lequel si l'on ne mesure pas les impulsions de signaux dans une période de temps prédéterminée, l'alimentation de l'énergie micro-onde dans le four est terminée et un signal d'erreur est présenté à l'utilisateur.

3. Procédé pour faire fonctionner un four à micro-ondes selon la revendication 2, dans lequel le signal d'erreur est communiqué à l'utilisateur par le biais d'une unité d'affichage (20) et/ou un signal audible.

4. Procédé pour faire fonctionner un four à micro-ondes selon la revendication 1, dans lequel le signal d'erreur indique que l'emballage alimentaire dans le four doit être ajusté pour une mesure de signaux optimale.

5. Procédé pour faire fonctionner un four à micro-ondes selon la revendication 1, dans lequel si la vitesse de changement entre les impulsions de signaux successives ne diminue pas dans une période de temps prédéterminée, l'alimentation de l'énergie micro-onde dans le four est terminée et on présente un signal d'erreur à l'utilisateur.

6. Procédé pour faire fonctionner un four à micro-ondes selon la revendication 1, dans lequel la valeur des impulsions de signaux augmente pendant le chauffage de l'élément thermochromique et dans lequel l'alimentation de l'énergie micro-onde dans le four est terminée lorsque la vitesse de changement entre les impulsions successives diminue jusqu'à une valeur prédéterminée.

7. Procédé pour faire fonctionner un four à micro-ondes selon la revendication 1, dans lequel l'élément thermochromique (26) peut être de préférence monté sur un petit bloc ou plaque réalisé avec un matériau polymère qui est isolé thermiquement du produit alimentaire et qui est soumis au chauffage correspondant à celui du produit alimentaire positionné dans l'emballage alimentaire.

8. Procédé pour faire fonctionner un four à micro-ondes selon la revendication 1, dans lequel l'élément thermochromique est appliqué et fait partie d'une étiquette d'emballage alimentaire.

9. Procédé pour faire fonctionner un four à micro-ondes selon la revendication 1, dans lequel le détecteur (24) est un dispositif optoélectronique capable d'émettre et de recevoir un signal lumineux.
